(19) Europäisches Patentamt
European Patent Office
Office européen des brevets

(11) **EP 4 299 615 B1**

(12) **EUROPEAN PATENT SPECIFICATION**

(45) Date of publication and mention
of the grant of the patent:
**08.04.2026  Bulletin 2026/15**

(21) Application number: **22759862.0**

(22) Date of filing: **28.02.2022**

(51) International Patent Classification (IPC):
*C08F 8/22* (2006.01)      *C08F 214/26* (2006.01)
*C08J 5/00* (2006.01)      *H01B 3/44* (2006.01)
*C09D 127/18* (2006.01)

(52) Cooperative Patent Classification (CPC):
(C-Sets available)
**C09D 127/18; C08F 8/22; C08F 214/262;
H01B 3/445**                          (Cont.)

(86) International application number:
**PCT/JP2022/008445**

(87) International publication number:
**WO 2022/181829 (01.09.2022 Gazette 2022/35)**

(54) **FLUORINE-CONTAINING COPOLYMER**

FLUORHALTIGES COPOLYMER

COPOLYMÈRE FLUORÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2021   JP 2021031106**

(43) Date of publication of application:
**03.01.2024   Bulletin 2024/01**

(73) Proprietor: **DAIKIN INDUSTRIES, LTD.
Osaka 530-0001 (JP)**

(72) Inventors:
• **ISAKA, Tadaharu
Osaka-shi, Osaka 530-0001 (JP)**
• **YAMAMOTO, Yukari
Osaka-shi, Osaka 530-0001 (JP)**
• **ZENKE, Yumi
Osaka-shi, Osaka 530-0001 (JP)**

(74) Representative: **Hoffmann Eitle
Patent- und Rechtsanwälte PartmbB
Arabellastraße 30
81925 München (DE)**

(56) References cited:
WO-A1-2008/047759      WO-A1-2008/047906
WO-A1-2019/159652      JP-A- 2014 028 953
US-A- 4 029 868        US-A- 4 029 868
US-A1- 2004 072 935    US-A1- 2008 090 065
US-A1- 2010 288 533

(52) Cooperative Patent Classification (CPC): (Cont.)

C-Sets
**C08F 8/22, C08F 214/262;**
**C08F 214/262, C08F 214/28, C08F 216/1408**

**Description**

TECHNICAL FIELD

The present disclosure relates to a fluorine-containing copolymer.

BACKGROUND ART

Patent Document 1 describes a combined article of an openable and closable hinge which can form an angle of at least 90° in the hinge in order to be opened, and an insulating wire which is fixed by the hinge so as to be folded when the hinge is closed and to be spread when the hinge is opened, wherein an insulating section of the wire includes a fluoropolymer having a melting point of 260 to 290°C and an MIT flex life of at least about 15,000 cycles. Patent Literature 2 discloses an electric wire coated with a copolymer comprising tetrafluoroethylene (TFE) units and, based on the total of monomer units, 7.4 wt.% of hexafluoropropylene (HFP) units and 1.5 wt. % of perfluoro(ethyl vinyl ether) (PEVE) units, which has a melt flow rate at 372°C of 10.8 g/10 min and a total number of -CF=CF2 , -CF2H, -COF, -COOH, -COOCH3, CONH2 and -CH2OH of ≤ 90. Patent Literature 3 discloses a copolymer comprising tetrafluoroethylene (TFE) units and, based on the total of monomer units 10 - 11 wt.% of hexafluoropropylene (HFP) units and 1 - 1.5 wt.% of perfluoro(ethyl vinyl ether) (PEVE) units and which has a melt flow rate at 372°C of 30 g/10 min and a total number of -CF=CF2 , -CF2H, -COF, -COOH, - COOCH3, CONH2 and -CH2OH of ≤ 90. Said copolymer is used as a coating for an electric wire.

RELATED ART

PATENT DOCUMENT

Patent Document 1: Japanese Translation of PCT International Application Publication No. 2010-507272,
Patent Literature 2: US 2008/090065 A1, Patent Literature 3: US 2010/288533 A1.

SUMMARY OF THE INVENTION

PROBLEM TO BE SOLVED BY THE INVENTION

An object of the present disclosure is to provide a fluorine-containing copolymer which can give a beautiful injection molded article by being molded at a high injection speed by an injection molding method, can be formed by an extrusion forming method into a thin coating layer at a high speed on a core wire small in diameter, and can give a formed article which hardly cause cracks even when contacted with chemical solutions, are excellent in the 80°C abrasion resistance, the ozone resistance, the low air permeation, the 120°C tensile creep resistance, and the compression repulsion, and hardly make fluorine ions to dissolve out in chemical solutions.

MEANS FOR SOLVING THE PROBLEM

According to the present disclosure, there is provided a fluorine-containing copolymer comprising tetrafluoroethylene unit, hexafluoropropylene unit and a fluoro(alkyl vinyl ether) unit, wherein the copolymer has a content of hexafluoropropylene unit of 5.0 to 7.0% by mass with respect to the whole of the monomer units, a content of the fluoro(alkyl vinyl ether) unit of 1.4 to 2.9% by mass with respect to the whole of the monomer units, a melt flow rate at 372°C of 9 to 40 g/10 min, and a total number of $-CF=CF_2$, $-CF_2H$, -COF, -COOH, $-COOCH_3$, $-CONH_2$ and $CH_2OH$ groups of 90 or less per $10^6$ main-chain carbon atoms.

It is preferable that the content of hexafluoropropylene unit is 5.2 to 6.8% by mass with respect to the whole of the monomer units.

It is preferable that the content of the fluoro(alkyl vinyl ether) unit is 1.7 to 2.4% by mass with respect to the whole of the monomer units.

It is preferable that the melt flow rate at 372°C is 11 to 38 g/10 min.

It is preferable that the fluoro(alkyl vinyl ether) unit is perfluoro(propyl vinyl ether) unit.

Then, according to the present disclosure, there is provided an injection molded article comprising the above fluorine-containing copolymer.

Further, according to the present disclosure, there is provided a coated electric wire comprising a coating layer comprising the above fluorine-containing copolymer.

Then, according to the present disclosure, there is provided a formed article comprising the above fluorine-containing copolymer, wherein the formed article is a member to be compressed, a filter cage or an electric wire coating.

EFFECT OF INVENTION

According to the present disclosure, there can be provided a fluorine-containing copolymer which can give a beautiful injection molded article by being molded at a high injection speed by an injection molding method, can be formed by an extrusion forming method into a thin coating layer at a high speed on a core wire small in diameter, and can give a formed article which hardly cause cracks even when contacted with chemical solutions, are excellent in the 80°C abrasion resistance, the ozone resistance, the low air permeation, the 120°C tensile creep resistance, and the compression repulsion, and hardly make fluorine ions to dissolve out in chemical solutions.

DESCRIPTION OF EMBODIMENTS

Hereinafter, specific embodiments of the present disclosure will be described in detail, but the present disclosure is not limited to the following embodiments.

A fluorine-containing copolymer of the present disclosure comprises tetrafluoroethylene (TFE) unit, hexafluoropropylene (HFP) unit and a fluoro(alkyl vinyl ether) (FAVE) unit.

Patent Document 1 describes the above combined article, wherein the insulating section of the insulating wire preferably includes a tetrafluoroethylene/hexafluoropropylene copolymer or a tetrafluoroethylene/perfluoro(methyl vinyl ether)/perfluoro(propyl vinyl ether) copolymer.

However, it has been here revealed that the copolymer described in Patent Document 1 is not sufficient in the low air permeation and the compression repulsion in some cases. In particular, it has been found that, if such a conventional copolymer is tried to be utilized for gaskets contactable with chemical solutions, the permeation of air cannot be sufficiently suppressed and/or members cannot be certainly sealed, and the oxidization of chemical solutions, the leakage out of chemical solutions and the penetration of moisture cannot be sufficiently suppressed. Accordingly, there is a demand for a fluorine-containing copolymer which is excellent in the 80°C abrasion resistance, the ozone resistance, the low air permeation, the 120°C tensile creep resistance, and the compression repulsion, is also excellent in the injection moldability, and is also excellent in the durability to chemical solutions such as hydrogen peroxide aqueous solutions.

Solutions for collectively solving these problems have been intensively studied, and it has been then found that, by regulating, in very limited ranges, the contents of HFP unit and the FAVE unit of the fluorine-containing copolymer comprising TFE unit, HFP unit and the FAVE unit, the melt flow rate and the number of functional groups, not only the formability of the fluorine-containing copolymer is enhanced, but also a formed article which hardly causes cracks even when contacted with chemical solutions, are excellent in the 80°C abrasion resistance, the ozone resistance, the low air permeation, the 120°C tensile creep resistance, and the compression repulsion, and hardly making fluorine ions to dissolve out in chemical solutions such as hydrogen peroxide aqueous solutions are obtained.

Moreover, by forming the fluorine-containing copolymer of the present disclosure by an extrusion forming method, a thin coating layer can be formed at a high speed on a core wire small in diameter, or a thin film uniform in thickness can be formed at a high forming speed. Thus, the fluorine-containing copolymer of the present disclosure can be not only utilized as materials for gaskets contactable with chemical solutions, but also can be utilized in broad applications such as electric wire coatings and films.

The fluorine-containing copolymer of the present disclosure is a melt-fabricable fluororesin. Being melt-fabricable means that a polymer can be melted and processed by using a conventional processing device such as an extruder or an injection molding machine.

Examples of the FAVE constituting the above FAVE unit include at least one selected from monomers represented by general formula (1):

$$CF_2=CFO(CF_2CFY^1O)_p\text{-}(CF_2CF_2CF_2O)_q\text{-}Rf \qquad (1)$$

(wherein $Y^1$ represents F or $CF_3$, Rf represents a perfluoroalkyl group having 1 to 5 carbon atoms, p represents an integer of 0 to 5, and q represents an integer of 0 to 5.), and monomers represented by general formula (2):

$$CFX=CXOCF_2OR^1 \qquad (2)$$

(wherein Xs are the same or different and each represent H, F or $CF_3$, and $R^1$ represents a linear or branched fluoroalkyl group having 1 to 6 carbon atoms, optionally containing 1 or 2 at least one atom selected from the group consisting of H, Cl, Br and I, or a cyclic fluoroalkyl group having 5 or 6 carbon atoms, optionally containing at least 1 or 2 at least one atom selected from the group consisting of H, Cl, Br and I.).

The above FAVE is, among them, preferably a monomer represented by general formula (1), at least one selected from the group consisting of perfluoro(methyl vinyl ether)s, perfluoro(ethyl vinyl ether)s (PEVE) and perfluoro(propyl vinyl ether)s (PPVE), still more preferably at least one selected from the group consisting of PEVE and PPVE, and especially preferably PPVE.

The content of the HFP unit of the fluorine-containing copolymer is, with respect to the whole of the monomer units, 5.0 to 7.0% by mass, preferably 5.1% by mass or higher, more preferably 5.2% by mass or higher, still more preferably 5.5% by mass or higher and especially preferably 5.7% by mass or higher, and preferably 6.9% by mass or lower, more preferably 6.8% by mass or lower, still more preferably 6.5% by mass or lower and especially preferably 6.3% by mass or lower. When the content of the HFP unit is too high, formed articles excellent in the 120°C tensile creep resistance and the compression repulsion cannot be obtained, and when the content of the HFP unit is too low, formed articles excellent in the 80°C abrasion resistance and the ozone resistance cannot be obtained, and the occurrence of cracks cannot be sufficiently suppressed if the formed articles are contacted with chemical solutions.

The content of the FAVE unit of the fluorine-containing copolymer is, with respect to the whole of the monomer units, 1.4 to 2.9% by mass, preferably 1.5% by mass or higher, more preferably 1.6% by mass or higher, still more preferably 1.7% by mass or higher, especially preferably 1.9% by mass or higher and most preferably 2.0% by mass or higher, and preferably 2.8% by mass or lower, more preferably 2.7% by mass or lower, still more preferably 2.6% by mass or lower, further still more preferably 2.5% by mass or lower, further still more preferably 2.4% by mass or lower, especially preferably 2.2% by mass or lower and most preferably 2.0% by mass or lower. When the content of the FAVE unit is too high, formed articles excellent in the 120°C tensile creep resistance and the compression repulsion cannot be obtained, and when the content of the FAVE unit is too low, formed articles excellent in the 80°C abrasion resistance and the ozone resistance cannot be obtained, and the occurrence of cracks cannot be sufficiently suppressed if the formed articles are contacted with chemical solutions.

The content of the TFE unit of the fluorine-containing copolymer is, with respect to the whole of the monomer units, preferably 90.1 to 93.6% by mass, more preferably 90.2% by mass or higher, still more preferably 90.3% by mass or higher, further still more preferably 90.5% by mass or higher, especially preferably 90.8% by mass or higher and most preferably 91.7% by mass or higher, and preferably 93.5% by mass or lower, more preferably 93.1% by mass or lower and still more preferably 92.3% by mass or lower. The content of the TFE unit may be selected so that there becomes 100% by mass, the total of contents of the HFP unit, the FAVE unit, the TFE unit and other monomer units.

The fluorine-containing copolymer of the present disclosure is not limited as long as the copolymer contains the above three monomer units, and may be a copolymer containing only the above three monomer units, or may be a copolymer containing the above three monomer units and other monomer units.

The other monomers are not limited as long as being copolymerizable with TFE, HFP and FAVE, and may be fluoromonomers or fluorine-non-containing monomers.

It is preferable that the fluoromonomer is at least one selected from the group consisting of chlorotrifluoroethylene, vinyl fluoride, vinylidene fluoride, trifluoroethylene, hexafluoroisobutylene, monomers represented by $CH_2=CZ^1(CF_2)_nZ^2$ (wherein $Z^1$ is H or F, $Z^2$ is H, F or Cl, and n is an integer of 1 to 10), alkyl perfluorovinyl ether derivatives represented by $CF_2=CF-O-CH_2-Rf^2$ (wherein $Rf^2$ is a perfluoroalkyl group having 1 to 5 carbon atoms), perfluoro-2,2-dimethyl-1,3-dioxol [PDD], and perfluoro-2-methylene-4-methyl-1,3-dioxolane [PMD].

The monomers represented by $CH_2=CZ^1(CF_2)_nZ^2$ include $CH_2=CFCF_3$, $CH_2=CH-C_4F_9$, $CH_2=CH-C_6F_{13}$, and $CH_2=CF-C_3F_6H$.

The fluorine-non-containing monomers include hydrocarbon-based monomers copolymerizable with TFE, HFP and FAVE. Examples of the hydrocarbon-based monomers include alkenes such as ethylene, propylene, butylene, and isobutylene; alkyl vinyl ethers such as ethyl vinyl ether, propyl vinyl ether, butyl vinyl ether, isobutyl vinyl ether, and cyclohexyl vinyl ether; vinyl esters such as vinyl acetate, vinyl propionate, n-vinyl butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl para-t-butylbenzoate, vinyl cyclohexanecarboxylate, vinyl monochloroacetate, vinyl adipate, vinyl acrylate, vinyl methacrylate, vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate, and vinyl hydroxycyclohexanecarboxylate; alkyl allyl ethers such as ethyl allyl ether, propyl allyl ether, butyl allyl ether, isobutyl allyl ether, and cyclohexyl allyl ether; and alkyl allyl esters such as ethyl allyl ester, propyl allyl ester, butyl allyl ester, isobutyl allyl ester, and cyclohexyl allyl ester.

The fluorine-non-containing monomers may also be functional group-containing hydrocarbon-based monomers copolymerizable with TFE, HFP and FAVE. Examples of the functional group-containing hydrocarbon-based monomers include hydroxyalkyl vinyl ethers such as hydroxyethyl vinyl ether, hydroxypropyl vinyl ether, hydroxybutyl vinyl ether, hydroxyisobutyl vinyl ether, and hydroxycyclohexyl vinyl ether; fluorine-non-containing monomers having a glycidyl group, such as glycidyl vinyl ether and glycidyl allyl ether; fluorine-non-containing monomers having an amino group, such as aminoalkyl vinyl ethers and aminoalkyl allyl ethers; fluorine-non-containing monomers having an amido group, such as (meth)acrylamide and methylolacrylamide; bromine-containing olefins, iodine-containing olefins, bromine-containing vinyl ethers, and iodine-containing vinyl ethers; and fluorine-non-containing monomers having a nitrile group.

The content of the other monomer units in the fluorine-containing copolymer of the present disclosure is, with respect to the whole of the monomer units, preferably 0 to 3.5% by mass, and more preferably 1.0% by mass or lower, still more preferably 0.5% by mass or lower and especially preferably 0.1% by mass or lower.

The melt flow rate (MFR) of the fluorine-containing copolymer is 9 to 40 g/10 min, preferably 9.1 g/10 min or higher, more preferably 9.6 g/10 min or higher, still more preferably 10 g/10 min or higher, further still more preferably 11 g/10 min or higher, further still more preferably 12 g/10 min or higher, especially preferably 13 g/10 min or higher, yet especially preferably 17 g/10 min or higher and most preferably 20 g/10 min or higher, and preferably 39.9 g/10 min or lower, more preferably 39 g/10 min or lower, still more preferably 38 g/10 min or lower, further still more preferably 34 g/10 min or lower, further still more preferably 33 g/10 min or lower, especially preferably 31 g/10 min or lower and most preferably 28 g/10 min or lower. Due to that the MFR of the fluorine-containing copolymer is in the above range, not only the formability of the copolymer is enhanced, but also formed articles which hardly cause cracks even when contacted with chemical solutions, are excellent in the 80°C abrasion resistance, the ozone resistance, the low air permeation, the 120°C tensile creep resistance, and the compression repulsion, and hardly make fluorine ions to dissolve out in chemical solutions such as hydrogen peroxide aqueous solutions can be obtained. When the MFR is too high, formed articles excellent in the 80°C abrasion resistance and the ozone resistance cannot be obtained, and when the MFR is too low, formed articles excellent in the low air permeation cannot be obtained.

In the present disclosure, the MFR is a value obtained as a mass (g/10 min) of a polymer flowing out from a die of 2 mm in inner diameter and 8 mm in length per 10 min at 372°C under a load of 5 kg using a melt indexer G-01 (manufactured by Toyo Seiki Seisaku-sho Ltd.), according to ASTM D1238.

The MFR can be regulated by regulating the kind and amount of a polymerization initiator to be used in polymerization of monomers, the kind and amount of a chain transfer agent, and the like.

The fluorine-containing copolymer of the present disclosure may or may not have a functional group. Such functional groups are functional groups present on the main chain terminals or side chain terminals of the fluorine-containing copolymer, and functional groups present on the main chain or the side chains thereof. The functional groups are $-CF=CF_2$, $-CF_2H$, $-COF$, $-COOH$, $-COOCH_3$, $-CONH_2$ and $-CH_2OH$.

The number of functional groups of the fluorine-containing copolymer is, per $10^6$ main-chain carbon atoms, 90 or less. The number of functional groups of the fluorine-containing copolymer is, per $10^6$ main-chain carbon atoms, more preferably 70 or less, still more preferably 50 or less, further still more preferably 40 or less, further especially preferably 30 or less, especially preferably 20 or less and most preferably less than 15. Due to that the number of functional groups of the fluorine-containing copolymer is in the above range, formed articles which are excellent in the ozone resistance and hardly make fluorine ions to dissolve out in chemical solutions such as hydrogen peroxide aqueous solutions can be obtained.

The number of functional groups of the fluorine-containing copolymer is the total number of $-CF=CF_2$, $-CF_2H$, $-COF$, $-COOH$, $-COOCH_3$, $-CONH_2$ and $-CH_2OH$.

The number of $-CF_2H$ of the fluorine-containing copolymer is, per $10^6$ main-chain carbon atoms, preferably 50 or less, more preferably 40 or less, still more preferably 30 or less, further still more preferably 20 or less, especially preferably less than 15 and most preferably 10 or less.

The total number of $-COOH$, $-COOCH_3$, $-CH_2OH$, $-COF$, $-CF=CF_2$ and $-CONH_2$ of the fluorine-containing copolymer is, per $10^6$ main-chain carbon atoms, preferably 80 or less, more preferably 70 or less, still more preferably 50 or less, further still more preferably 40 or less, further especially preferably 30 or less, especially preferably 20 or less and most preferably less than 15.

For identification of the kind of the functional groups and measurement of the number of the functional groups, infrared spectroscopy can be used.

The number of the functional groups is measured, specifically, by the following method. First, the fluorine-containing copolymer is molded by cold press to prepare a film of 0.25 to 0.30 mm in thickness. The film is analyzed by Fourier transform infrared spectroscopy to obtain an infrared absorption spectrum, and a difference spectrum against a base spectrum that is completely fluorinated and has no functional groups is obtained. From an absorption peak of a specific functional group observed on this difference spectrum, the number N of the functional group per $1 \times 10^6$ carbon atoms in the fluorine-containing copolymer is calculated according to the following formula (A).

$$N = I \times K/t \cdots (A)$$

I: absorbance
K: correction factor
t: thickness of film (mm)

For reference, for some functional groups, the absorption frequency, the molar absorption coefficient and the correction factor are shown in Table 1. Then, the molar absorption coefficients are those determined from FT-IR measurement data of low molecular model compounds.

[Table 1]

Table 1

| Functional Group | Absorption Frequency ($cm^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| $-COOCH_3$ | 1795 | 680 | 342 | $C_7F_{15}COOCH_3$ |
| $-CONH_2$ | 3436 | 506 | 460 | $C_7H_{15}CONH_2$ |
| $-CH_2OH_2$, -OH | 3648 | 104 | 2236 | $C_7H_{15}CH_2OH$ |
| $-CF_2H$ | 3020 | 8.8 | 26485 | $H(CF_2CF_2)_3CH_2OH$ |
| $-CF=CF_2$ | 1795 | 635 | 366 | $CF_2=CF_2$ |

Absorption frequencies of $-CH_2CF_2H$, $-CH_2COF$, $-CH_2COOH$, $-CH_2COOCH_3$ and $-CH_2CONH_2$ are lower by a few tens of kaysers ($cm^{-1}$) than those of $-CF_2H$, -COF, -COOH free and -COOH bonded, $-COOCH_3$ and $-CONH_2$ shown in the Table, respectively.

For example, the number of the functional group -COF is the total of the number of a functional group determined from an absorption peak having an absorption frequency of 1,883 $cm^{-1}$ derived from $-CF_2COF$ and the number of a functional group determined from an absorption peak having an absorption frequency of 1,840 $cm^{-1}$ derived from $-CH_2COF$.

The number of $-CF_2H$ groups can also be determined from a peak integrated value of the $-CF_2H$ group acquired in a $^{19}F$-NMR measurement using a nuclear magnetic resonance spectrometer and set at a measurement temperature of (the melting point of a polymer + 20)°C.

Functional groups are functional groups present on the main chain terminals or side chain terminals of the fluorine-containing copolymer, and functional groups present on the main chain or the side chains thereof. The number of functional groups is the total number of $-CF=CF_2$, $-CF_2H$, -COF, -COOH, $-COOCH_3$, $-CONH_2$ and $-CH_2OH$.

The functional groups are introduced to the fluorine-containing copolymer, for example, by a chain transfer agent or a polymerization initiator used in production of the fluorine-containing copolymer. For example, in the case of using an alcohol as the chain transfer agent, or a peroxide having a structure of $-CH_2OH$ as the polymerization initiator, $-CH_2OH$ is introduced on the main chain terminals of the fluorine-containing copolymer. Alternatively, the functional group is introduced on the side chain terminal of the fluorine-containing copolymer by polymerizing a monomer having the functional group.

By carrying out a treatment such as a wet heat treatment or a fluorination treatment on the fluorine-containing copolymer having such functional groups, there can be obtained the fluorine-containing copolymer having the number of functional groups in the above range. The fluorine-containing copolymer of the present disclosure is preferably one having been subjected to the wet heat treatment or the fluorination treatment, and more preferably one having been subjected to the fluorination treatment. The fluorine-containing copolymer of the present disclosure preferably has $-CF_3$ terminal groups.

The melting point of the fluorine-containing copolymer is preferably 255 to 295°C, more preferably 255 to 290°C and still more preferably 269 to 288°C. Due to that the melting point is in the above range, not only the formability of the copolymer is more enhanced, but also formed articles which more hardly cause cracks even when contacted with chemical solutions, are more excellent in the 80°C abrasion resistance, the ozone resistance, the low air permeation, the 120°C tensile creep resistance, and the compression repulsion, and more hardly make fluorine ions to dissolve out in chemical solutions such as hydrogen peroxide aqueous solutions can be obtained.

In the present disclosure, the melting point can be measured by using a differential scanning calorimeter [DSC].

The air permeation coefficient of the fluorine-containing copolymer is preferably 350 $cm^3 \cdot mm/(m^2 \cdot 24h \cdot atm)$ or lower and more preferably 340 $cm^3 \cdot mm/(m^2 \cdot 24h \cdot atm)$ or lower. The fluorine-containing copolymer of the present disclosure has an excellent low air permeation due to suitably regulated contents of the HFP unit and the FAVE unit of the fluorine-containing copolymer comprising the TFE unit, the HFP unit and the FAVE unit, melt flow rate, and number of functional groups.

In the present disclosure, the air permeation coefficient can be measured under the condition of a test temperature of 70°C and a test humidity of 0%RH. The specific measurement of the air permeation coefficient can be carried out by a method described in Examples.

In the fluorine-containing copolymer of the present disclosure, the amount of fluorine ions dissolving out therefrom detected by an immersion test in a hydrogen peroxide aqueous solution is, in terms of mass, preferably 4.0 ppm or smaller, more preferably 3.0 ppm or smaller, more preferably 2.8 ppm or smaller. Due to that the amount of fluorine ions dissolving out is in the above range, fluorine ions can be inhibited from dissolving out in chemical solutions when formed articles obtained by using the fluorine-containing copolymer of the present disclosure are used in piping members used in transfer of chemical solutions, flowmeter frames including flow channels for chemical solutions in flowmeters, sealing members to be contacted with chemical solutions, and the like.

In the present disclosure, the immersion test in a hydrogen peroxide aqueous solution can be carried out by using the fluorine-containing copolymer and preparing a test piece having a weight corresponding to that of 10 sheets of a formed article (15 mm × 15 mm × 0.2 mm), and putting, in a thermostatic chamber of 95°C, a polypropylene-made bottle in which the test piece and 15 g of a 3-mass% hydrogen peroxide aqueous solution are put and allowing the resultant to stand for 20 hours.

The fluorine-containing copolymer of the present disclosure can be produced by any polymerization method of bulk polymerization, suspension polymerization, solution polymerization, emulsion polymerization and the like. In these polymerization methods, conditions such as temperature and pressure, a polymerization initiator, a chain transfer agent, a solvent and other additives can suitably be set depending on the composition and the amount of a desired fluorine-containing copolymer.

The polymerization initiator may be an oil-soluble radical polymerization initiator or a water-soluble radical initiator.

An oil-soluble radical polymerization initiator may be a known oil-soluble peroxide, and examples thereof typically include:

dialkyl peroxycarbonates such as di-n-propyl peroxydicarbonate, diisopropyl peroxydicarbonate, di-sec-butyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by [(RfCOO)-]$_2$ wherein Rf is a perfluoroalkyl group, an ω-hydroperfluoroalkyl group or a fluorochloroalkyl group.

Examples of the di[fluoro(or fluorochloro)acyl] peroxides include di(ω-hydro-dodecafluorohexanoyl) peroxide, di(ω-hydro-tetradecafluoroheptanoyl) peroxide, di(ω-hydro-hexadecafluorononanoyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydrododecafluoroheptanoyl-ω-hydrohexadecafluorononanoyl peroxide, ω-chloro-hexafluorobutyryl-ω-chloro-decafluorohexanoyl peroxide, ω-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide and di(undecachlorotriacontafluorodocosanoyl) peroxide.

The water-soluble radical polymerization initiator may be a well known water-soluble peroxide, and examples thereof include ammonium salts, potassium salts and sodium salts of persulfuric acid, perboric acid, perchloric acid, perphosphoric acid, percarbonic acid and the like, and t-butyl permaleate and t-butyl hydroperoxide. A reductant such as a sulfite salt may be combined with a peroxide and used, and the amount thereof to be used may be 0.1 to 20 times with respect to the peroxide.

Examples of the chain transfer agent include hydrocarbons such as ethane, isopentane, n-hexane and cyclohexane; aromatics such as toluene and xylene; ketones such as acetone; acetates such as ethyl acetate and butyl acetate; alcohols such as methanol, ethanol and 2,2,2-trifluoroethanol; mercaptans such as methyl mercaptan; halogenated hydrocarbons such as carbon tetrachloride, chloroform, methylene chloride and methyl chloride; and 3-fluorobenzotrifluoride. The amount thereof to be added can vary depending on the magnitude of the chain transfer constant of a compound to be used, but the chain transfer agent is used usually in the range of 0.01 to 20 parts by mass with respect to 100 parts by mass of a solvent.

For example, in the cases of using a dialkyl peroxycarbonate, a di[fluoro(or fluorochloro)acyl] peroxide or the like as a polymerization initiator, although there are some cases where the molecular weight of an obtained fluorine-containing copolymer becomes too high and the regulation of the melt flow rate to a desired one is not easy, the molecular weight can be regulated by using the chain transfer agent. It is especially suitable that the fluorine-containing copolymer is produced by suspension polymerization using the chain transfer agent such as an alcohol and the oil-soluble radical polymerization initiator.

The solvent includes water and mixed solvents of water and an alcohol. A monomer to be used for the polymerization of the fluorine-containing copolymer of the present disclosure can also be used as the solvent.

In the suspension polymerization, in addition to water, a fluorosolvent may be used. The fluorosolvent may include hydrochlorofluoroalkanes such as $CH_3CClF_2$, $CH_3CCl_2F$, $CF_3CF_2CCl_2H$ and $CF_2ClCF_2CFHCl$; chlorofluoroa-laknes such as $CF_2ClCFClCF_2CF_3$ and $CF_3CFClCFClCF_3$; and perfluoroalkanes such as perfluorocyclobutane, $CF_3CF_2CF_2CF_3$, $CF_3CF_2CF_2CF_2CF_3$ and $CF_3CF_2CF_2CF_2CF_2CF_3$, and among these, perfluoroalkanes are preferred. The amount of the fluorosolvent to be used is, from the viewpoint of the suspensibility and the economic efficiency, preferably 10 to 100 parts by mass with respect to 100 parts by mass of the solvent.

The polymerization temperature is not limited, and may be 0 to 100°C. In the case where the decomposition rate of the polymerization initiator is too high, including cases of using a dialkyl peroxycarbonate, a di[fluoro(or fluorochloro) acyl] peroxide or the like as the polymerization initiator, it is preferable to adopt a relatively low polymerization temperature such as in the temperature range of 0 to 35°C.

The polymerization pressure can suitably be determined according to other polymerization conditions such as the kind of the solvent to be used, the amount of the solvent, the vapor pressure and the polymerization temperature, but usually may be 0 to 9.8 MPaG. The polymerization pressure is preferably 0.1 to 5 MPaG, more preferably 0.5 to 2 MPaG and still more preferably 0.5 to 1.5 MPaG. When the polymerization pressure is 1.5 MPaG or higher, the production efficiency can be improved.

Examples of the additives in the polymerization include suspension stabilizers. The suspension stabilizers are not limited as long as being conventionally well-known ones, and methylcellulose, polyvinyl alcohols and the like can be used. With the use of a suspension stabilizer, suspended particles produced by the polymerization reaction are dispersed stably in an aqueous medium, and therefore the suspended particles hardly adhere on the reaction vessel even when a SUS-made reaction vessel not having been subjected to adhesion preventing treatment such as glass lining is used. Accordingly, a reaction vessel withstanding a high pressure can be used, and therefore the polymerization under a high pressure becomes possible and the production efficiency can be improved. By contrast, in the case of carrying out the polymerization without using the suspension stabilizer, the suspended particles may adhere and the production efficiency may be lowered with the use of a SUS-made reaction vessel not having been subjected to adhesion preventing treatment is used. The concentration of the suspension stabilizer in the aqueous medium can suitably be regulated depending on conditions.

In the case of obtaining an aqueous dispersion containing a fluoropolymer by a polymerization reaction, a dried fluoropolymer may be recovered by coagulating, cleaning and drying the fluorine-containing copolymer contained in the aqueous dispersion. Alternatively, in the case of obtaining the fluorine-containing copolymer as a slurry by a polymerization reaction, a dried fluoropolymer may be recovered by taking out the slurry from a reaction vessel, and cleaning and drying the slurry. The fluorine-containing copolymer can be recovered in a powder form by the drying.

The fluorine-containing copolymer obtained by the polymerization may be formed into pellets. A method of forming into pellets is not limited, and a conventionally known method can be used. Examples thereof include methods of melt extruding the fluorine-containing copolymer by using a single-screw extruder, a twin-screw extruder or a tandem extruder and cutting the resultant into a predetermined length to form the fluorine-containing copolymer into pellets. The extrusion temperature in the melt extrusion needs to be varied depending on the melt viscosity and the production method of the fluorine-containing copolymer, and is preferably the melting point of the fluorine-containing copolymer + 20°C to the melting point of the fluorine-containing copolymer + 140°C. A method of cutting the fluorine-containing copolymer is not limited, and there can be adopted a conventionally known method such as a strand cut method, a hot cut method, an underwater cut method, or a sheet cut method. Volatile components in the obtained pellets may be removed by heating the pellets (degassing treatment). Alternatively, the obtained pellets may be treated by bringing the pellets into contact with hot water of 30 to 200°C, steam of 100 to 200°C or hot air of 40 to 200°C.

The fluorine-containing copolymer obtained by the polymerization may be heated in the presence of air and water at a temperature of 100°C or higher (wet heat treatment). Examples of the wet heat treatment include a method in which by using an extruder, the fluorine-containing copolymer obtained by the polymerization is melted and extruded while air and water are fed. The wet heat treatment can convert thermally unstable functional groups of the fluorine-containing copolymer, such as -COF and -COOH, to thermally relatively stable $-CF_2H$, whereby the total number of -COF and -COOH and the total number of -COOH, $-COOCH_3$, $-CH_2OH$, -COF, $-CF=CF_2$, and $-CONH_2$ of the fluorine-containing copolymer can easily be regulated in the above-mentioned ranges. By heating the fluorine-containing copolymer, in addition to air and water, in the presence of an alkali metal salt, the conversion reaction to $-CF_2H$ can be promoted. Depending on applications of the fluorine-containing copolymer, however, it should be paid regard to that contamination by the alkali metal salt must be avoided.

The fluorine-containing copolymer obtained by the polymerization may be subjected to a fluorination treatment. The fluorination treatment can be carried out by bringing the fluorine-containing copolymer subjected to no fluorination treatment into contact with a fluorine-containing compound. The fluorination treatment can convert thermally unstable functional groups of the fluorine-containing copolymer, such as -COOH, - COOCH$_3$, -CH$_2$OH, -COF, -CF=CF$_2$, and -CONH$_2$, and thermally relatively stable functional groups thereof, such as -CF$_2$H, to thermally very stable -CF$_3$. Resultantly, the total number of COOH, -COOCH$_3$, - CH$_2$OH, -COF, -CF=CF$_2$, -CONH$_2$, and -CF$_2$H of the fluorine-containing copolymer can easily be regulated in the above-mentioned ranges.

The fluorine-containing compound is not limited, but includes fluorine radical sources generating fluorine radicals under the fluorination treatment condition. The fluorine radical sources include F$_2$ gas, CoF$_3$, AgF$_2$, UF$_6$, OF$_2$, N$_2$F$_2$, CF$_3$OF, halogen fluorides (for example, IF$_5$ and ClF$_3$).

The fluorine radical source such as F$_2$ gas may be, for example, one having a concentration of 100%, but from the viewpoint of safety, the fluorine radical source is preferably mixed with an inert gas and diluted therewith to 5 to 50% by mass, and then used; and it is more preferably to be diluted to 15 to 30% by mass. The inert gas includes nitrogen gas, helium gas and argon gas, but from the viewpoint of the economic efficiency, nitrogen gas is preferred.

The condition of the fluorination treatment is not limited, and the fluorine-containing copolymer in a melted state may be brought into contact with the fluorine-containing compound, but the fluorination treatment can be carried out usually at a temperature of not higher than the melting point of the fluorine-containing copolymer, preferably at 20 to 220°C and more preferably at 100 to 200°C. The fluorination treatment is carried out usually for 1 to 30 hours and preferably 5 to 25 hours. The fluorination treatment is preferred which brings the fluorine-containing copolymer having been subjected to no fluorination treatment into contact with fluorine gas (F$_2$ gas).

A composition may be obtained by mixing the fluorine-containing copolymer of the present disclosure and as required, other components. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube and glass fiber. The electrically conductive agents include carbon black. The plasticizers include dioctyl phthalate and pentaerythritol. The processing aids include carnauba wax, sulfone compounds, low molecular weight polyethylene and fluorine-based auxiliary agents. The dehydrofluorination agents include organic oniums and amidines.

Then, the other components may be other polymers other than the above-mentioned fluorine-containing copolymer. The other polymers include fluororesins other than the above fluorine-containing copolymer, fluoroelastomers and non-fluorinated polymers.

A method of producing the above composition includes a method in which the fluorine-containing copolymer and other components are dry mixed, and a method in which the fluorine-containing copolymer and other components are previously mixed by a mixer, and then, melt kneaded by a kneader, a melt extruder or the like.

The fluorine-containing copolymer of the present disclosure or the above-mentioned composition can be used as a processing aid, a forming material or the like, but it is suitable to use that as a forming material. Then, aqueous dispersions, solutions and suspensions of the fluorine-containing copolymer of the present disclosure, and the copolymer/solvent-based materials can also be utilized; and these can be used for application of coating materials, encapsulation, impregnation, and casting of films. However, since the fluorine-containing copolymer of the present disclosure has the above-mentioned properties, it is preferable to use the copolymer as the forming material.

Formed articles may be obtained by forming the fluorine-containing copolymer of the present disclosure or the above-mentioned composition.

A method of forming the fluorine-containing copolymer or the composition is not limited, and includes injection molding, extrusion forming, compression molding, blow molding, transfer molding, rotomolding and rotolining molding. As the forming method, among these, preferable are extrusion forming, compression molding, injection molding and transfer molding; from the viewpoint of being able to produce forming articles in a high productivity, more preferable are injection molding, extrusion forming and transfer molding, and still more preferable is injection molding. That is, it is preferable that formed articles are extrusion formed articles, compression molded articles, injection molded articles or transfer molded articles; and from the viewpoint of being able to produce molded articles in a high productivity, being injection molded articles, extrusion formed articles or transfer molded articles is more preferable, and being injection molded articles is still more preferable. By subjecting the fluorine-containing copolymer of the present disclosure to molding by an injection molding method, beautiful formed articles can be obtained even by the molding at a high injection speed.

Formed articles containing the fluorine-containing copolymer of the present disclosure may be, for example, nuts, bolts, joints, films, bottles, gaskets, electric wire coatings, tubes, hoses, pipes, valves, sheets, seals, packings, tanks, rollers, containers, cocks, connectors, filter housings, filter cages, flowmeters, pumps, wafer carriers, and wafer boxes.

The fluorine-containing copolymer of the present disclosure, the above composition and the above formed articles can be used, for example, in the following applications.

Food packaging films, and members for liquid transfer for food production apparatuses, such as lining materials of fluid transfer lines, packings, sealing materials and sheets, used in food production processes;

chemical stoppers and packaging films for chemicals, and members for chemical solution transfer, such as lining materials of liquid transfer lines, packings, sealing materials and sheets, used in chemical production processes; inner surface lining materials of chemical solution tanks and piping of chemical plants and semiconductor factories; members for fuel transfer, such as O (square) rings, tubes, packings, valve stem materials, hoses and sealing materials, used in fuel systems and peripheral equipment of automobiles, and such as hoses and sealing materials, used in ATs of automobiles;

members used in engines and peripheral equipment of automobiles, such as flange gaskets of carburetors, shaft seals, valve stem seals, sealing materials and hoses, and other vehicular members such as brake hoses, hoses for air conditioners, hoses for radiators, and electric wire coating materials;

members for chemical transfer for semiconductor production apparatuses, such as O (square) rings, tubes, packings, valve stem materials, hoses, sealing materials, rolls, gaskets, diaphragms and joints;

members for coating and inks, such as coating rolls, hoses and tubes, for coating facilities, and containers for inks;

members for food and beverage transfer, such as tubes, hoses, belts, packings and joints for food and beverage, food packaging materials, and members for glass cooking appliances; members for waste liquid transport, such as tubes and hoses for waste transport;

members for high-temperature liquid transport, such as tubes and hoses for high-temperature liquid transport;

members for steam piping, such as tubes and hoses for steam piping;

corrosionproof tapes for piping, such as tapes wound on piping of decks and the like of ships;

various coating materials, such as electric wire coating materials, optical fiber coating materials, and transparent front side coating materials installed on the light incident side and back side lining materials of photoelectromotive elements of solar cells;

diaphragms and sliding members such as various types of packings of diaphragm pumps;

films for agriculture, and weathering covers for various kinds of roof materials, sidewalls and the like;

interior materials used in the building field, and coating materials for glasses such as non-flammable fireproof safety glasses; and

lining materials for laminate steel sheets used in the household electric field.

The fuel transfer members used in fuel systems of automobiles further include fuel hoses, filler hoses and evap hoses. The above fuel transfer members can also be used as fuel transfer members for gasoline additive-containing fuels, resultant to sour gasoline, resultant to alcohols, and resultant to methyl tertiary butyl ether and amines and the like.

The above chemical stoppers and packaging films for chemicals have excellent chemical resistance to acids and the like. The above chemical solution transfer members also include corrosionproof tapes wound on chemical plant pipes.

The above formed articles also include vehicular radiator tanks, chemical solution tanks, bellows, spacers, rollers and gasoline tanks, waste solution transport containers, high-temperature liquid transport containers and fishery and fish farming tanks.

The above formed articles further include members used for vehicular bumpers, door trims and instrument panels, food processing apparatuses, cooking devices, water- and oil-repellent glasses, illumination-related apparatuses, display boards and housings of OA devices, electrically illuminated billboards, displays, liquid crystal displays, cell phones, printed circuit boards, electric and electronic components, sundry goods, dust bins, bathtubs, unit baths, ventilating fans, illumination frames and the like.

Since formed articles containing the fluorine-containing copolymer of the present disclosure hardly cause cracks even when contacted with chemical solutions and are excellent in the 80°C abrasion resistance, the ozone resistance, the low air permeation, the 120°C tensile creep resistance, and the compression repulsion, the formed articles can suitably be utilized for nuts, bolts, joints, packings, valves, cocks, connectors, filter housings, filter cages, flowmeters, pumps, and the like. Among them, the formed articles can suitably be utilized for piping members (in particular, valves and joints) used in transfer of chemical solutions, and flowmeter frames including flow channels for chemical solutions in flowmeters. The piping members and the flowmeter frames of the present disclosure hardly cause cracks even when contacted with chemical solutions, and are excellent in the 80°C abrasion resistance, the ozone resistance, the low air permeation, the 120°C tensile creep resistance, and the compression repulsion. Hence, the piping members and the flowmeter frames of the present disclosure are hardly abraded by flow of chemical solutions, and are hardly damaged even when subjected to repeated application of stress according to the flow initiation, the flow termination and the change in flow rate of chemical solutions.

Since formed articles containing the fluorine-containing copolymer of the present disclosure can give beautiful injection molded articles by being molded at a high injection speed by an injection molding method, hardly cause cracks even when contacted with chemical solutions, and are excellent in the 80°C abrasion resistance, the ozone resistance, the low air permeation, the 120°C tensile creep resistance, and the compression repulsion, the formed articles can suitably be utilized for members to be compressed such as gaskets and packings. The member to be compressed of the present disclosure may be a gasket or a packing. The gasket or the packing of the present disclosure can be produced at a low cost by an injection molding method, hardly causes cracks even when contacted with chemical solutions, and is excellent in the 80°C abrasion resistance, the ozone resistance, the low air permeation, the 120°C tensile creep resistance, and the compression repulsion.

The size and shape of the members to be compressed of the present disclosure may suitably be set according to applications, and are not limited. The shape of the members to be compressed of the present disclosure may be, for example, annular. The members to be compressed of the present disclosure may also have, in plan view, a circular shape, an elliptic shape, a corner-rounded square or the like, and may be a shape having a throughhole in the central portion thereof.

It is preferable that the members to be compressed of the present disclosure are used as members constituting non-aqueous electrolyte batteries. Due to that the members to be compressed of the present disclosure hardly cause cracks even when contacted with chemical solutions, and are excellent in the 80°C abrasion resistance, the ozone resistance, the low air permeation, the 120°C tensile creep resistance, and the compression repulsion, the members to be compressed are especially suitable as members to be used in a state of contacting with a non-aqueous electrolyte in non-aqueous electrolyte batteries. That is, the members to be compressed of the present disclosure may also be ones having a liquid-contact surface with a non-aqueous electrolyte in the non-aqueous electrolyte batteries.

The non-aqueous electrolyte batteries are not limited as long as being batteries having a non-aqueous electrolyte, and examples thereof include lithium ion secondary batteries and lithium ion capacitors. Members constituting the non-aqueous electrolyte batteries include sealing members and insulating members.

For the non-aqueous electrolyte, one or two or more of well-known solvents can be used such as propylene carbonate, ethylene carbonate, butylene carbonate, $\gamma$-butyllactone, 1,2-dimethoxyethane, 1,2-diethoxyethane, dimethyl carbonate, diethyl carbonate and ethyl methyl carbonate. The non-aqueous electrolyte batteries may further have an electrolyte. The electrolyte is not limited, but may be $LiClO_4$, $LiAsF_6$, $LiPF_6$, $LiBF_4$, $LiCl$, $LiBr$, $CH_3SO_3Li$, $CF_3SO_3Li$, cesium carbonate and the like.

The members to be compressed of the present disclosure can suitably be utilized, for example, as sealing members such as sealing gaskets and sealing packings, and insulating members such as insulating gaskets and insulating packings. The sealing members are members to be used for preventing leakage of a liquid or a gas, or penetration of a liquid or a gas from the outside. The insulating members are members to be used for insulating electricity. The members to be compressed of the present disclosure may also be members to be used for the purpose of both of sealing and insulation.

Due to that the members to be compressed of the present disclosure hardly cause cracks even when contacted with chemical solutions, and are excellent in the 80°C abrasion resistance, the ozone resistance, the low air permeation, the 120°C tensile creep resistance, and the compression repulsion, the members to be compressed can suitably be used as sealing members for non-aqueous electrolyte batteries or insulating members for non-aqueous electrolyte batteries. Further, the members to be compressed of the present disclosure, due to containing the above fluorine-containing copolymer, have the excellent insulating property. Therefore, in the case of using the members to be compressed of the present disclosure as insulating members, the member firmly adhere to two or more electrically conductive members and prevent short circuit over a long term.

Since the fluorine-containing copolymer of the present disclosure can be formed by an extrusion forming method into a thin coating layer at a high speed on a core wire small in diameter, the copolymer can suitably be utilized as materials for forming electric wire coatings. Since coated electric wires having a coating layer containing the fluorine-containing copolymer of the present disclosure have almost no defects causing sparks, the coated electric wires are excellent in the electric properties.

The coated electric wire has a core wire, and the coating layer installed on the periphery of the core wire and containing the fluorine-containing copolymer of the present disclosure. For example, an extrusion formed article made by melt extruding the fluorine-containing copolymer in the present disclosure on a core wire can be made into the coating layer. The coated electric wires are suitable for LAN cables (Eathernet Cables), high-frequency transmission cables, flat cables and heat-resistant cables and the like, and particularly, for transmission cables such as LAN cables (Eathernet Cables) and high-frequency transmission cables.

As a material for the core wire, for example, a metal conductor material such as copper or aluminum can be used. The core wire is preferably one having a diameter of 0.02 to 3 mm. The diameter of the core wire is more preferably 0.04 mm or larger, still more preferably 0.05 mm or larger and especially preferably 0.1 mm or larger. The diameter of the core wire is more preferable 2 mm or smaller.

With regard to specific examples of the core wire, there may be used, for example, AWG (American Wire Gauge)-46 (solid copper wire of 40 $\mu$m in diameter), AWG-26 (solid copper wire of 404 $\mu$m in diameter), AWG-24 (solid copper wire of 510 $\mu$m in diameter), and AWG-22 (solid copper wire of 635 $\mu$m in diameter).

The coating layer is preferably one having a thickness of 0.1 to 3.0 mm. It is also preferable that the thickness of the coating layer is 2.0 mm or smaller.

The high-frequency transmission cables include coaxial cables. The coaxial cables generally have a structure configured by laminating an inner conductor, an insulating coating layer, an outer conductor layer and a protective coating layer in order from the core part to the peripheral part. A formed article containing the fluorine-containing copolymer of the present disclosure can suitably be utilized as the insulating coating layer containing the fluorine-containing copolymer. The thickness of each layer in the above structure is not limited, but is usually: the diameter of the inner conductor is approximately 0.1 to 3 mm; the thickness of the insulating coating layer is approximately 0.3 to 3 mm; the thickness of the outer conductor layer is approximately 0.5 to 10 mm; and the thickness of the protective coating layer is approximately 0.5 to 2 mm.

Alternatively, the coating layer may be one containing cells, and is preferably one in which cells are homogeneously distributed.

The average cell size of the cells is not limited, but is, for example, preferably 60 $\mu$m or smaller, more preferably 45 $\mu$m or smaller, still more preferably 35 $\mu$m or smaller, further still more preferably 30 $\mu$m or smaller, especially preferable 25 $\mu$m or smaller and further especially preferably 23 $\mu$m or smaller. Then, the average cell size is preferably 0.1 $\mu$m or larger and more preferably 1 $\mu$m or larger. The average cell size can be determined by taking an electron microscopic image of an electric wire cross section, calculating the diameter of each cell and averaging the diameters.

The foaming ratio of the coating layer may be 20% or higher, and is more preferably 30% or higher, still more preferably 33% or higher and further still more preferably 35% or higher. The upper limit is not limited, but is, for example, 80%. The upper limit of the foaming ratio may be 60%. The foaming ratio is a value determined as ((the specific gravity of an electric wire coating material - the specific gravity of the coating layer)/(the specific gravity of the electric wire coating material) $\times$ 100. The foaming ratio can suitably be regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the electric wire of the present disclosure may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the fluorine-containing copolymer, extruding the fluorine-containing copolymer in a melt state on the core wire to thereby form the coating layer.

In formation of a coating layer, by heating the fluorine-containing copolymer and introducing a gas in the fluorine-containing copolymer in a melt state, the coating layer containing cells can be formed. As the gas, there can be used, for example, a gas such as chlorodifluoromethane, nitrogen or carbon dioxide, or a mixture thereof. The gas may be introduced as a pressurized gas in the heated fluorine-containing copolymer, or may be generated by mingling a chemical foaming agent in the fluorine-containing copolymer. The gas dissolves in the fluorine-containing copolymer in a melt state.

Then, the fluorine-containing copolymer of the present disclosure can suitably be utilized as a material for products for high-frequency signal transmission.

The products for high-frequency signal transmission are not limited as long as being products to be used for transmission of high-frequency signals, and include (1) formed boards such as insulating boards for high-frequency circuits, insulating materials for connection parts and printed circuit boards, (2) formed articles such as bases of high-frequency vacuum tubes and antenna covers, and (3) coated electric wires such as coaxial cables and LAN cables. The products for high-frequency signal transmission can suitably be used in devices utilizing microwaves, particularly microwaves of 3 to 30 GHz, in satellite communication devices, cell phone base stations, and the like.

In the products for high-frequency signal transmission, the fluorine-containing copolymer of the present disclosure can suitably be used as insulators in that the dielectric loss tangent is low.

As the (1) formed boards, printed wiring boards are preferable in that the good electric property is provided. The printed wiring boards are not limited, but examples thereof include printed wiring boards of electronic circuits for cell phones, various computers, communication devices and the like. As the (2) formed articles, antenna covers are preferable in that the dielectric loss is low.

The fluorine-containing copolymer of the present disclosure can be formed by an extrusion forming method at a high forming speed into thin films uniform in thickness, and furthermore the obtained formed articles, due to hardly causing cracks even when contacted with chemical solutions, being excellent in the 80°C abrasion resistance, the ozone resistance, the low air permeation, the 120°C tensile creep resistance, and the compression repulsion, and hardly making fluorine ions to dissolve out in chemical solutions such as hydrogen peroxide aqueous solutions, can suitably be utilized for films.

The films of the present disclosure are useful as release films. The release films can be produced by forming the fluorine-containing copolymer of the present disclosure by melt extrusion, calendering, press molding, casting or the like. From the viewpoint that uniform thin films can be obtained, the release films can be produced by melt extrusion.

The films of the present disclosure can be applied to roll surfaces used in OA devices. Then, the fluorine-containing copolymer of the present disclosure is formed into needed shapes by extrusion forming, compression molding, press molding or the like to be formed into sheet-shapes, filmy shapes or tubular shapes, and can be used as surface materials for OA device rolls, OA device belts or the like. Thin-wall tubes and films can be produced particularly by a melt extrusion forming method.

The fluorine-containing copolymer of the present disclosure can give beautiful injection molded articles by being molded at a high injection speed by an injection molding method, and furthermore the obtained formed articles, due to hardly causing cracks even when contacted with chemical solutions and being excellent in the 80°C abrasion resistance, the ozone resistance, the low air permeation, the 120°C tensile creep resistance, and the compression repulsion, can suitably be utilized for valves. Accordingly, valves containing the fluorine-containing copolymer of the present disclosure not only can be produced at a low cost in a high productivity, but also are hardly damaged even when frequently repeatedly opened and closed, and are excellent in the sealability. At least liquid-contact parts of the valves of the present disclosure can be constituted by the above fluorine-containing copolymer. The valves of the present disclosure may be valves provided with an enclosure containing the above fluorine-containing copolymer.

EXAMPLES

The embodiments of the present disclosure will be described by Examples as follows, but the present disclosure is not limited only to these Examples.

Each numerical value in Examples was measured by the following methods.

(Contents of monomer units)

The content of each monomer unit of the fluorine-containing copolymer was measured by an NMR analyzer (for example, manufactured by Bruker BioSpin GmbH, AVANCE 300, high-temperature probe), or an infrared absorption spectrometer (manufactured by PerkinElmer, Inc., Spectrum One).

(The number of $-CF_2H$)

The number of $-CF_2H$ groups of the fluorine-containing copolymer was determined from a peak integrated value of the $-CF_2H$ group acquired in a $^{19}F$-NMR measurement using a nuclear magnetic resonance spectrometer AVANCE-300 (manufactured by Bruker BioSpin GmbH) and set at a measurement temperature of (the melting point of the polymer + 20)°C.

(The numbers of -COOH, $-COOCH_3$, $-CH_2OH$, -COF, $-CF=CF_2$ and - $CONH_2$)

A dried powder or pellets obtained in each of Examples and Comparative Examples were molded by cold press to prepare a film of 0.25 to 0.3 mm in thickness. The film was 40 times scanned by a Fourier transform infrared spectrometer [FT-IR (Spectrum One, manufactured by PerkinElmer, Inc.)] and analyzed to obtain an infrared absorption spectrum. The obtained infrared absorption spectrum was compared with an infrared absorption spectrum of an already known film to determine the kinds of terminal groups. Further, from an absorption peak of a specific functional group emerging in a difference spectrum between the obtained infrared absorption spectrum and the infrared absorption spectrum of the already known film, the number N of the functional group per $1 \times 10^6$ carbon atoms in the sample was calculated according to the following formula (A).

$$N = I \times K/t \cdots (A)$$

I: absorbance
K: correction factor
t: thickness of film (mm)

Regarding the functional groups in Examples, for reference, the absorption frequency, the molar absorption coefficient and the correction factor are shown in Table 2. Further, the molar absorption coefficients are those determined from FT-IR measurement data of low molecular model compounds.

[Table 2]

Table 2

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF=CF$_2$ | 1795 | 635 | 366 | $CF_2=CF_2$ |

(Melt flow rate (MFR))

The MFR of the fluorine-containing copolymer was determined by using a Melt Indexer G-01 (manufactured by Toyo Seiki Seisaku-sho, Ltd.), and making the polymer to flow out from a die of 2 mm in inner diameter and 8 mm in length at 372°C under a load of 5 kg and measuring the mass (g/10 min) of the polymer flowing out per 10 min, according to ASTM D1238.

(Melting point)

The fluorine-containing copolymer was heated, as a first temperature raising step at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corp.); and the melting point of the fluorine-containing copolymer was determined from a melting curve peak observed in the second temperature raising step.

Example 1

40.25 kg of deionized water and 0.603 kg of methanol were fed in a 174 L-volume autoclave with a stirrer, and the autoclave inside was sufficiently vacuumized and replaced with nitrogen. Thereafter, the autoclave inside was vacuum deaerated, and in the autoclave put in a vacuum state, 40.25 kg of HFP and 1.17 kg of PPVE were fed; and the autoclave was heated to 25.5°C. Then, TFE was fed until the internal pressure of the autoclave became 0.970 MPa; and then, 1.25 kg of a 8-mass% di(ω-hydroperfluorohexanoyl) peroxide solution (hereinafter, abbreviated to DHP) was fed in the autoclave to initiate polymerization. The internal pressure of the autoclave at the initiation of the polymerization was set at 0.970 MPa, and by continuously adding TFE, the set pressure was made to be held. After 1.5 hours from the polymerization initiation, 0.603 kg of methanol was additionally fed. After 2 hours and 4 hours from the polymerization initiation, 1.25 kg of DHP was additionally fed, and the internal pressure was lowered by 0.002 MPa, respectively; after 6 hours therefrom, 0.96 kg thereof was fed and the internal pressure was lowered by 0.002 MPa. Hereafter, 0.25 kg of DHP was fed at every 2 hours until the reaction finished, and at the every time, the internal pressure was lowered by 0.002 MPa.

Then, at each time point when the amount of TFE continuously additionally fed reached 8.1 kg, 16.2 kg and 24.3 kg, 0.19 kg of PPVE was additionally fed. Then, at each time point when the amount of TFE additionally fed reached 6.0 kg and 18.1 kg, 0.603 kg of methanol was additionally fed in the autoclave. Then, when the amount of TFE additionally fed reached 40.25 kg, the polymerization was made to finish. After the finish of the polymerization, unreacted TFE and HFP were discharged to thereby obtain a wet powder. Then, the wet powder was washed with pure water, and thereafter dried at 150°C for 10 hours to thereby obtain 43.7 kg of a dry powder.

The obtained powder was melt extruded at 370°C by a screw extruder (trade name: PCM46, manufactured by Ikegai Corp.) to thereby obtain pellets of a copolymer. By using the obtained pellets, the content of HFP and the content of PPVE were measured by the methods described above. The results are shown in Table 3.

The obtained pellets were deaerated at 200°C for 8 hours in an electric furnace, put in a vacuum vibration-type reactor VVD-30 (manufactured by Okawara Mfg. Co. Ltd.), and heated to 200°C. After vacuumizing, $F_2$ gas diluted to 20% by volume with $N_2$ gas was introduced to the atmospheric pressure. 0.5 hour after the $F_2$ gas introduction, vacuumizing was once carried out and $F_2$ gas was again introduced. Further, 0.5 hour thereafter, vacuumizing was again carried out and $F_2$ gas was again introduced. Thereafter, while the above operation of the $F_2$ gas introduction and the vacuumizing was carried out once every 1 hour, the reaction was carried out at a temperature of 200°C for 8 hours. After the reaction was finished, the reactor interior was replaced sufficiently by $N_2$ gas to finish the fluorination reaction, thereby obtaining pellets. By using the obtained pellets, the above physical properties were measured by the methods described above. The results are shown in Table 3.

Example 2

Copolymer pellets were obtained as in Example 1, except for changing the amount of methanol fed before the polymerization initiation to 0.570 kg, changing the each amount of methanol dividedly additionally fed after the polymerization initiation to 0.570 kg, changing the amount of PPVE fed before the polymerization initiation to 1.09 kg, changing the each amount of PPVE dividedly additionally fed after the polymerization initiation to 0.19 kg, and changing the each set pressure in the autoclave inside before and after the polymerization initiation to 0.948 MPa. By using the obtained pellets, the content of HFP and the content of PPVE were measured by the methods described above. The results are shown in Table 3.

The obtained pellets were deaerated at 200°C for 72 hours in an electric furnace, put in a vacuum vibration-type reactor VVD-30 (manufactured by Okawara Mfg. Co. Ltd.), and heated to 110°C. After vacuumizing, $F_2$ gas diluted to 20% by volume with $N_2$ gas was introduced to the atmospheric pressure. 0.5 hour after the $F_2$ gas introduction, vacuumizing was once carried out and $F_2$ gas was again introduced. Further, 0.5 hour thereafter, vacuumizing was again carried out and $F_2$ gas was again introduced. Thereafter, while the above operation of the $F_2$ gas introduction and the vacuumizing was carried out once every 1 hour, the reaction was carried out at a temperature of 110°C for 8 hours. After the reaction was finished, the reactor interior was replaced sufficiently by $N_2$ gas to finish the fluorination reaction, thereby obtaining pellets. By using obtained pellets, the above physical properties were measured by the methods described above. The results are shown in Table 3.

Example 3

Copolymer pellets were obtained as in Example 1, except for changing the amount of methanol fed before the polymerization initiation to 0.685 kg, changing the each amount of methanol dividedly additionally fed after the polymerization initiation to 0.685 kg, changing the amount of PPVE fed before the polymerization initiation to 1.17 kg, changing the each amount of PPVE dividedly additionally fed after the polymerization initiation to 0.19 kg, and changing the each set pressure in the autoclave inside before and after the polymerization initiation to 0.970 MPa. By using the obtained pellets, the content of HFP and the content of PPVE were measured by the methods described above. The results are shown in Table 3.

The obtained pellets were fluorinated as in Example 1. By using obtained pellets, the above physical properties were measured by the methods described above. The results are shown in Table 3.

Example 4

Copolymer pellets were obtained as in Example 1, except for changing the amount of methanol fed before the polymerization initiation to 0.727 kg, changing the each amount of methanol dividedly additionally fed after the polymerization initiation to 0.727 kg, changing the amount of PPVE fed before the polymerization initiation to 1.65 kg, changing the each amount of PPVE dividedly additionally fed after the polymerization initiation to 0.27 kg, and changing the each set pressure in the autoclave inside before and after the polymerization initiation to 0.970 MPa. By using the obtained pellets, the content of HFP and the content of PPVE were measured by the methods described above. The results are shown in Table 3.

The obtained pellets were fluorinated as in Example 1. By using obtained pellets, the above physical properties were measured by the methods described above. The results are shown in Table 3.

Example 5

Copolymer pellets were obtained as in Example 1, except for changing the amount of methanol fed before the polymerization initiation to 0.647 kg, changing the each amount of methanol dividedly additionally fed after the polymerization initiation to 0.727 kg, changing the amount of PPVE fed before the polymerization initiation to 1.09 kg, changing the each amount of PPVE dividedly additionally fed after the polymerization initiation to 0.19 kg, and changing the each set pressure in the autoclave inside before and after the polymerization initiation to 0.948 MPa. By using the obtained pellets, the content of HFP and the content of PPVE were measured by the methods described above. The results are shown in Table 3.

The obtained pellets were fluorinated as in Example 1. By using obtained pellets, the above physical properties were measured by the methods described above. The results are shown in Table 3.

Example 6

Copolymer pellets were obtained as in Example 1, except for changing the amount of methanol fed before the polymerization initiation to 0.608 kg, changing the each amount of methanol dividedly additionally fed after the polymerization initiation to 0.608 kg, changing the amount of PPVE fed before the polymerization initiation to 1.19 kg, changing the each amount of PPVE dividedly additionally fed after the polymerization initiation to 0.22 kg, and changing the each set pressure in the autoclave inside before and after the polymerization initiation to 0.924 MPa. By using the obtained pellets, the content of HFP and the content of PPVE were measured by the methods described above. The results are shown in Table 3.

The obtained pellets were fluorinated as in Example 1. By using obtained pellets, the above physical properties were measured by the methods described above. The results are shown in Table 3.

Example 7

Copolymer pellets were obtained as in Example 1, except for changing the amount of methanol fed before the polymerization initiation to 0.555 kg, changing the each amount of methanol dividedly additionally fed after the polymerization initiation to 0.555 kg, changing the amount of PPVE fed before the polymerization initiation to 0.95 kg, changing the each amount of PPVE dividedly additionally fed after the polymerization initiation to 0.19 kg, and changing the each set pressure in the autoclave inside before and after the polymerization initiation to 0.906 MPa. By using the obtained pellets, the content of HFP and the content of PPVE were measured by the methods described above. The results are shown in Table 3.

The obtained pellets were fluorinated as in Example 1. By using obtained pellets, the above physical properties were measured by the methods described above. The results are shown in Table 3.

Example 8

945 g of deionized water and 13.7 g of methanol were fed in a 4 L-volume autoclave with a stirrer, and the autoclave inside was sufficiently vacuumized and replaced with nitrogen. Thereafter, the autoclave inside was vacuum deaerated, and in the autoclave put in a vacuum state, 945 g of HFP and 27.8 g of PEVE were fed; and the autoclave was heated to 25.5°C. Then, TFE was fed until the internal pressure of the autoclave became 0.927 MPa; and then, 29.4 g of a 8-mass% di($\omega$-hydroperfluorohexanoyl) peroxide solution (hereinafter, abbreviated to DHP) was fed in the autoclave to initiate polymerization. The internal pressure of the autoclave at the initiation of the polymerization was set at 0.927 MPa, and by continuously adding TFE, the set pressure was made to be held. After 1.5 hours from the polymerization initiation, 13.7 g of methanol was additionally fed. After 2 hours and 4 hours from the polymerization initiation, 29.4 g of DHP was additionally fed, and the internal pressure was lowered by 0.002 MPa, respectively; after 6 hours therefrom, 22.6 g thereof was fed and the internal pressure was lowered by 0.002 MPa. Hereafter, 6.0 g of DHP was fed at every 2 hours until the reaction finished, and at the every time, the internal pressure was lowered by 0.002 MPa.

Then, at each time point when the amount of TFE continuously additionally fed reached 190 g and 380 g, 5.2 g of PEVE was additionally fed. Then, at each time point when the amount of TFE additionally fed reached 140 g, 13.7 g of methanol was additionally fed in the autoclave. Then, at each time point when the amount of TFE additionally fed reached 454 g, the polymerization was made to finish. After the finish of the polymerization, unreacted TFE and HFP were discharged to thereby obtain a wet powder. Then, the wet powder was washed with pure water, and thereafter dried at 150°C for 10 hours to thereby obtain 501 g of a dry powder.

The obtained powder was melt extruded at 370°C by a 14$\varphi$ screw extruder (manufactured by Imoto Machinery Co. Ltd.) to thereby obtain pellets of a copolymer. By using the obtained pellets, the content of HFP and the content of PEVE were measured by the methods described above. The results are shown in Table 3.

The obtained pellets were deaerated at 200°C for 8 hours in an electric furnace, put in a portable reactor Model TVS1 (manufactured by Taiatsu Techno Co., Ltd.), and heated to 200°C. After vacuumizing, $F_2$ gas diluted to 20% by volume with $N_2$ gas was introduced to the atmospheric pressure. 0.5 hour after the $F_2$ gas introduction, vacuumizing was once carried out and $F_2$ gas was again introduced. Further, 0.5 hour thereafter, vacuumizing was again carried out and $F_2$ gas was again introduced. Thereafter, while the above operation of the $F_2$ gas introduction and the vacuumizing was carried out once every 1 hour, the reaction was carried out at a temperature of 200°C for 8 hours. After the reaction was finished, the reactor interior was replaced sufficiently by $N_2$ gas to finish the fluorination reaction, thereby obtaining pellets. By using obtained pellets, the above physical properties were measured by the methods described above. The results are shown in Table 3.

Comparative Example 1

Copolymer pellets were obtained as in Example 1, except for changing the amount of methanol fed before the polymerization initiation to 0.851 kg, changing the each amount of methanol dividedly additionally fed after the polymerization initiation to 0.851 kg, changing the amount of PPVE fed before the polymerization initiation to 1.38 kg, changing the each amount of PPVE dividedly additionally fed after the polymerization initiation to 0.22 kg, and changing the each set pressure in the autoclave inside before and after the polymerization initiation to 0.999 MPa. By using the obtained pellets, the content of HFP and the content of PPVE were measured by the methods described above. The results are shown in Table 3.
The obtained pellets were fluorinated as in Example 1. By using obtained pellets, the above physical properties were measured by the methods described above. The results are shown in Table 3.

Comparative Example 2

Copolymer pellets were obtained as in Example 1, except for changing the amount of methanol fed before the polymerization initiation to 0.769 kg, changing the each amount of methanol dividedly additionally fed after the polymerization initiation to 0.769 kg, changing the amount of PPVE fed before the polymerization initiation to 1.28 kg, changing the each amount of PPVE dividedly additionally fed after the polymerization initiation to 0.22 kg, and changing the each set pressure in the autoclave inside before and after the polymerization initiation to 0.948 MPa. By using the obtained pellets, the content of HFP and the content of PPVE were measured by the methods described above. The results are shown in Table 3.
The obtained pellets were fluorinated as in Example 1. By using obtained pellets, the above physical properties were measured by the methods described above. The results are shown in Table 3.

Comparative Example 3

0.945 kg of deionized water and 0.017 kg of methanol were fed in a 4 L-volume autoclave with a stirrer, and the autoclave inside was sufficiently vacuumized and replaced with nitrogen. Thereafter, the autoclave inside was vacuum deaerated, and in the autoclave put in a vacuum state, 0.945 kg of HFP was fed; and the autoclave was heated to 25.5°C. Then, TFE was fed until the internal pressure of the autoclave became 0.948 MPa; and then, 0.029 kg of a 8-mass% di($\omega$-hydroperfluorohexanoyl) peroxide solution (hereinafter, abbreviated to DHP) was fed in the autoclave to initiate polymerization. The internal pressure of the autoclave at the initiation of the polymerization was set at 0.948 MPa, and by continuously adding TFE, the set pressure was made to be held. After 1.5 hours from the polymerization initiation, 0.017 kg of methanol was additionally fed. After 2 hours and 4 hours from the polymerization initiation, 0.029 kg of DHP was additionally fed, and the internal pressure was lowered by 0.002 MPa.
Then, at a time point when the amount of TFE additionally fed reached 0.141 kg, 0.017 kg of methanol was additionally fed in the autoclave. Then, at a time point when the amount of TFE additionally fed reached 0.473 kg, the polymerization was made to finish. After the finish of the polymerization, unreacted TFE and HFP were discharged to thereby obtain a wet powder. Then, the wet powder was washed with pure water, and thereafter dried at 150°C for 10 hours to thereby obtain 0.506 kg of a dry powder.
The obtained powder was melt extruded at 370°C by a 14$\varphi$ screw extruder (manufactured by Imoto Machinery Co. Ltd.) to thereby obtain pellets of a copolymer. By using the obtained pellets, the content of HFP and the content of PPVE were measured by the methods described above. The results are shown in Table 3.
The obtained pellets were deaerated at 200°C for 8 hours in an electric furnace, put in a 500-ml portable reactor (Model TVS1, manufactured by Taiatsu Techno Co., Ltd.), and heated to 200°C. After vacuumizing, $F_2$ gas diluted to 20% by volume with $N_2$ gas was introduced to the atmospheric pressure. 0.5 hour after the $F_2$ gas introduction, vacuumizing was once carried out and $F_2$ gas was again introduced. Further, 0.5 hour thereafter, vacuumizing was again carried out and $F_2$ gas was again introduced. Thereafter, while the above operation of the $F_2$ gas introduction and the vacuumizing was carried out once every 1 hour, the reaction was carried out at a temperature of 200°C for 8 hours. After the reaction was finished, the reactor interior was replaced sufficiently by $N_2$ gas to finish the fluorination reaction, thereby obtaining pellets. By using obtained pellets, the above physical properties were measured by the methods described above. The results are shown in Table 3.

Comparative Example 4

Copolymer pellets were obtained as in Example 1, except for changing the amount of methanol fed before the polymerization initiation to 0.516 kg, changing the each amount of methanol dividedly additionally fed after the polymerization initiation to 0.516 kg, changing the amount of PPVE fed before the polymerization initiation to 1.37 kg, changing the each amount of PPVE dividedly additionally fed after the polymerization initiation to 0.22 kg, and changing the each set pressure in the autoclave inside before and after the polymerization initiation to 0.970 MPa. By using the obtained pellets, the content of HFP and the content of PPVE were measured by the methods described above. The results are shown in Table 3.
The obtained pellets were fluorinated as in Example 1. By using obtained pellets, the above physical properties were measured by the methods described above. The results are shown in Table 3.

Comparative Example 5

Copolymer pellets were obtained as in Example 1, except for changing the amount of methanol fed before the polymerization initiation to 0.411 kg, changing the each amount of methanol dividedly additionally fed after the polymerization initiation to 0.411 kg, changing the amount of PPVE fed before the polymerization initiation to 0.96 kg, changing the each amount of PPVE dividedly additionally fed after the polymerization initiation to 0.22 kg, and changing the each set pressure in the autoclave inside before and after the polymerization initiation to 0.866 MPa. By using the obtained pellets, the content of HFP and the content of PPVE were measured by the methods described above. The results are shown in Table 3.
The obtained pellets were fluorinated as in Example 1. By using obtained pellets, the above physical properties were measured by the methods described above. The results are shown in Table 3.

Comparative Example 6

Copolymer pellets were obtained as in Example 1, except for changing the amount of methanol fed before the polymerization initiation to 0.612 kg, changing the each amount of methanol dividedly additionally fed after the polymerization initiation to 0.612 kg, changing the amount of PPVE fed before the polymerization initiation to 1.19 kg, changing the each amount of PPVE dividedly additionally fed after the polymerization initiation to 0.22 kg, and changing the each set pressure in the autoclave inside before and after the polymerization initiation to 0.924 MPa. By using the obtained pellets without fluorination, the above physical properties were measured by the methods described above. The results are shown in Table 3.

[Table 3]

Table 3

| | HFP content (% by mass) | PPVE content (% by mass) | Number of -$CF_2H$ (number/$C10^6$) | Number N of functional groups (number/$C10^6$) | MFR (g/10 min) | Melting point (°C) |
|---|---|---|---|---|---|---|
| Example 1 | 5.2 | 1.7 | < 9 | < 6 | 11 | 282 |
| Example 2 | 5.7 | 1.7 | 22 | < 6 | 13 | 279 |
| Example 3 | 5.2 | 1.7 | < 9 | < 6 | 20 | 283 |
| Example 4 | 5.2 | 2.4 | < 9 | < 6 | 38 | 278 |
| Example 5 | 5.7 | 1.7 | < 9 | < 6 | 23 | 280 |
| Example 6 | 6.3 | 2.0 | < 9 | < 6 | 31 | 274 |
| Example 7 | 6.8 | 1.7 | < 9 | < 6 | 26 | 274 |
| Example 8 | 6.3 | 2.0(PEVE) | < 9 | < 6 | 31 | 274 |
| Comparative Example 1 | 4.0 | 1.7 | < 9 | < 6 | 26 | 290 |

(continued)

| | HFP content (% by mass) | PPVE content (% by mass) | Number of $-CF_2H$ (number/$C10^6$) | Number N of functional groups (number/$C10^6$) | MFR (g/10 min) | Melting point (°C) |
|---|---|---|---|---|---|---|
| Comparative Example 2 | 5.7 | 2.0 | < 9 | < 6 | 70 | 278 |
| Comparative Example 3 | 5.7 | 0 | < 9 | < 6 | 20 | 294 |
| Comparative Example 4 | 5.2 | 2.0 | < 9 | < 6 | 6.0 | 280 |
| Comparative Example 5 | 8.1 | 2.0 | < 9 | < 6 | 24 | 263 |
| Comparative Example 6 | 6.3 | 2.0 | 491 | 30 | 30 | 274 |

The description "<9" in Table 3 means that the number of $-CF_2H$ groups was less than 9. The description "<6" in Table 3 means the total number (number N of functional groups) of - COOH, $-COOCH_3$, $-CH_2OH$, -COF, $-CF=CF_2$ and $-CONH_2$ was less than 6.

Then, by using the obtained pellets, the following properties were evaluated. The results are shown in Table 4.

(Abrasion test)

By using the pellets and a heat press molding machine, a sheet-shape test piece of approximately 0.2 mm in thickness was prepared and cut out into a test piece of 10 cm × 10 cm. The prepared test piece was fixed on a test bench of a Taber abrasion tester (No. 101, Taber type abrasion tester with an option, manufactured by Yasuda Seiki Seisakusho, Ltd.), and the abrasion test was carried out under the conditions of at a test piece surface temperature of 80°C, at a load of 500 g, using an abrasion wheel CS-10 (rotationally polished in 20 rotations with an abrasion paper #240), and at a rotation rate of 60 rpm, using the Taber abrasion tester. The weight of the test piece after 1,000 rotations was measured, and the same test piece was further subjected to the test of 4,000 rotations and thereafter, the weight thereof was measured. The abrasion loss was determined by the following formula.

$$\text{Abrasion loss (mg)} = \text{M1} - \text{M2}$$

M1: the weight of the test piece after the 1,000 rotations (mg)
M2: the weight of the test piece after the 4,000 rotations (mg)

(Ozone exposure test)

By subjecting the fluorine-containing copolymer to compression molding at a pressure of 0.5 MPa at 350°C, a sheet of 1 mm in thickness was prepared, and cut out to a size of 10 × 20 mm and adopted as a sample for an ozone exposure test. The ozone gas (ozone/oxygen = 10/90% by volume) generated in an ozone generator (trade name: SGX-A11MN (modified), manufactured by Sumitomo Seiki Kogyo Co., Ltd.) was placed in a PFA-made container containing ion-exchange water and thus bubbled into the ion-exchange water to thereby add steam to the ozone gas, and then allowed to pass through a PFA-made cell containing the sample, at 0.7 L/min, at room temperature to thereby expose the sample to the wet ozone gas. After 30 days from the initiation of the exposure, the sample was taken out and the surface thereof was lightly rinsed with ion-exchange water, thereafter a portion located at a depth of 5 to 200 µm from the sample surface was observed at a magnification of 100x with a transmission type optical microscope, and imaged together with a standard scale, and the number of cracks of 10 µm or longer in length, per millimeter square of the sample surface, was measured. Evaluation was performed according to the following criteria.

Good: the number of cracks was 10 or less
Poor: the number of cracks was more than 10

(Air permeation coefficient)

By using the pellets and a heat press molding machine, a sheet-shape test piece of approximately 0.1 mm in thickness was prepared. Measurement of the air permeability was carried out on the obtained test piece according to a method described in JIS K7126-1:2006 by using a differential pressure type permeability tester (L100-5000 type gas permeability tester, manufactured by Systech illinois Ltd.). There was obtained a numerical value of the air permeability at a permeation area of 50.24 cm$^2$, a test temperature of 70°C and at a test humidity of 0%RH. By using the obtained air permeability and the thickness of the test piece, the air permeability coefficient was calculated by the following formula.

$$\text{Air permeability coefficient } (cm^3 \cdot mm/(m^2 \cdot 24h \cdot atm)) = GTR \times d$$

GTR: air permeability (cm$^3$/(m$^2$·24h·atm))
d: test piece thickness (mm)

(Tensile creep test)

The tensile creep strain was measured by using TMA-7100, manufactured by Hitachi High-Tech Science Corp. By using the pellets and a heat press molding machine, a sheet of approximately 0.1 mm in thickness was prepared, and a sample of 2 mm in width and 22 mm in length was prepared from the sheet. The sample was mounted on measurement jigs with the distance between the jigs of 10 mm. A load was applied on the sample so that the cross-sectional load became 4.10 N/mm$^2$, and allowed to stand at 120°C; and there was measured the displacement (mm) from the timepoint of 90 min from the test initiation to the timepoint of 750 min from the test initiation, and there was calculated the proportion (tensile creep strain (%)) of the displacement (mm) to the initial sample length (10 mm). A sheet low in the tensile creep stain (%) measured under the condition of at 120°C for 750 min is hardly elongated even when a tensile load is applied for a long time in a high-temperature environment, being excellent in the high-temperature tensile creep property (120°C).

(Storage elastic modulus (E'))

The storage elastic modulus was determined by carrying out a dynamic viscoelasticity measurement using a DVA-220 (manufactured by IT Keisoku Seigyo K.K.). By using, as a sample test piece, a heat press molded sheet of 25 mm in length, 5 mm in width and 0.2 mm in thickness, the measurement was carried out under the condition of a temperature-increasing rate of 2°C/min, and a frequency of 10 Hz, and in the range of 30°C to 250°C, and the storage elastic modulus (MPa) at 65°C was identified.

(Amount of recovery)

The amount of recovery was measured according to a method described in ASTM D395 or JIS K6262:2013.
Approximately 2 g of the pellets was charged in a metal mold (inner diameter: 13 mm, height: 38 mm), and in that state, melted by hot plate press at 370°C for 30 min, thereafter, water-cooled under a pressure of 0.2 MPa (resin pressure) to thereby prepare a molded article of approximately 8 mm in height. Thereafter, the obtained molded article was cut to prepare a test piece of 13 mm in outer diameter and 6 mm in height. The prepared test piece was compressed to a compression deformation rate of 50% (that is, the test piece of 6 mm in height was compressed to a height of 3 mm) at a normal temperature by using a compression device. The compressed test piece fixed on the compression device was allowed to stand still in an electric furnace at 65°C for 72 hours. The compression device was taken out from the electric furnace, and cooled to room temperature; thereafter, the test piece was dismounted. The collected test piece was allowed to stand at room temperature for 30 min, and the height of the collected test piece was measured and the amount of recovery was determined by the following formula.

$$\text{Amount of recovery } (mm) = t_2 - t_1$$

$t_1$: the height of a spacer (mm)
$t_2$: the height of the test piece dismounted from the compression device (mm)

In the above test, $t_1$ was 3 mm.

(Repulsion at 65°C)

The sealing pressure at 65°C was determined from the measurement result of the amount of recovery at 65°C and the measurement result of the storage elastic modulus at 65°C, by the following formula.

$$65°C \text{ Repulsion } (MPa) = (t_2 - t_1)/t_1 \times E'$$

$t_1$: the height of a spacer (mm)
$t_2$: the height of the test piece dismounted from the compression device (mm)
E': the storage elastic modulus at 65°C (MPa)
Formed articles large in the repulsion (compression repulsion) at 65°C can exhibit excellent sealability.

(Electric wire coating extrusion conditions)

By using a 30-mmφ electric wire coating extruder (manufactured by Tanabe Plastics Machinery Co. Ltd.), the fluorine-containing copolymer was extrusion coated in the following coating thickness on a copper conductor of 0.50 mm in conductor diameter to thereby obtain a coated electric wire. The electric wire coating extrusion conditions were as follows.

a) Core conductor: conductor diameter: 0.50 mm
b) Coating thickness: 0.20 mm
c) Coated electric wire diameter: 0.90 mm
d) Electric wire take-over speed: 70 m/min
e) Extrusion condition:

· Cylinder screw diameter = 30 mm, a single-screw extruder of L/D = 22
· Die (inner diameter)/tip (outer diameter) = 9.0 mm/5.0 mm Set temperature of the extruder: barrel section C-1 (320°C), barrel section C-2 (350°C), barrel section C-3 (370°C), head section H (380°C), die section D-1 (380°C), die section D-2 (380°C), Set temperature for preparing core wire: 80°C.

(Coating breakage)

Electric wire coating extrusion was continuously carried out, and the case where coating breakage occurred one or more times in one hour was taken as continuously unextrudable (Poor) and the case where coating breakage did not occur was taken as continuously extrudable (Good).

(Spark)

A spark tester (DENSOK HIGH FREQ SPARK TESTER) was online disposed on an electric wire coating line, and the presence of defects on the electric wire coating was evaluated at a voltage of 1500 V. The extrusion was continuously performed for 1 hour, and the number of times of sparks was counted.

(Injection moldability)

· Condition

The copolymer was injection molded by using an injection molding machine (SE50EV-A, manufactured by Sumitomo Heavy Industries, Ltd.) set at a cylinder temperature of 385°C, a metal mold temperature of 180°C and an injection speed of 20 mm/s. The metal mold used was a metal mold (100 mm × 100 mm × 2.0 mmt, film gate, flow length from the gate: 100 mm) Cr plated on HPM38. The obtained injection molded article was observed and evaluated according to the following criteria. The presence/absence of white turbidity was visually checked. The presence/absence of roughness of the surface was checked by touching the surface of the injection molded article.

3: The whole of the injection molded article was transparent and the whole surface was smooth.
2: White turbidity was observed within the region of 1 cm from the portion where the gate of the metal mold had been positioned, and the whole surface was smooth.
1: White turbidity was observed within the region of 1 cm from the portion where the gate of the metal mold had been positioned, and roughness was observed on the surface within the region of 1 cm of the portion where the gate of the metal mold had been positioned.
0: The copolymer was not filled in the whole of the metal mold and the molded article having a desired shape was not obtained.

The injection molded article obtained in Comparative Example 2 could not be utilized as a formed article as it was because burr was observed.

(Film moldability)

By using a φ14-mm extruder (manufactured by Imoto Machinery Co. Ltd.) and a T die, the pellets were formed to prepare a film. The extrusion conditions were as follows.

a) Take-up speed: 1 m/min
b) Roll temperature: 120°C
c) Film width: 70 mm
d) Thickness: 0.10 mm
e) Extrusion condition:

· Cylinder screw diameter = 14 mm, a single-screw extruder of L/D = 20

Set temperature of the extruder: barrel section C-1 (330°C), barrel section C-2 (350°C), barrel section C-3 (365°C), T die section (370°C)

The extrusion forming of the fluorine-containing copolymer was continued until the fluorine-containing copolymer became enabled to be stably extruded from the extruder. Successively, by extruding the fluorine-containing copolymer, a film (70 mm wide) of 11 m or longer in length was prepared so that that thickness became 0.10 mm. A portion of 10 to 11 m of the obtained film was cut out from one end of the film and there was prepared a test piece (1 m long and 70 mm wide) for measuring the fluctuation in the thickness. Then, there were measured thicknesses of 3 points in total on one end of the obtained film of a middle point in the width direction and 2 points separated by 25 mm from the middle point in the width direction. Further, there were measured 9 points in total of 3 middle points in the width direction spaced at intervals of 25 cm from the middle point in the width direction of the one end of the film toward the other end thereof, and 2 points separated by 25 mm in the width direction from the each middle point of the 3 middle points. Among the 12 measurement values in total, the case where the number of points having measurement values out of the range of ±10% of 0.10 mm was 1 or less was taken as good; and the case where the number of points having measurement values out of the range of ±10% of 0.10 mm was 2 or more was taken as poor.

(Chemical solution immersion crack test)

Approximately 50 g of the pellets was charged in a metal mold (inner diameter 120 mm, height 38 mm), and heated by hot plate press at 360°C for 20 min, thereafter, water-cooled with a pressure of 1 MPa to thereby prepare a formed article of approximately 2 mm in thickness. The obtained sheet was punched out by using a rectangular dumbbell of 13.5 mm × 38 mm to obtain three test pieces. A notch was formed on the middle of a long side of the each obtained test piece according to ASTM D1693 by a blade of 19 mm × 0.45 mm. The three notched test pieces and 25 g of a 30-mass% by mass potassium hydroxide aqueous solution were put in a 100-mL polypropylene-made bottle, and heated in an electric furnace at 100°C for 20 hours; thereafter the notched test pieces were taken out. The obtained three notched test pieces were mounted on a stress crack test jig according to ASTM D1693, and the notches and their vicinities were visually observed and the number of cracks was counted.

Good: the number of cracks was 0
Poor: the number of cracks was 1 or more

(Immersion test in a hydrogen peroxide aqueous solution)

By using the pellets and a heat press molding machine, a sheet of approximately 0.2 mm in thickness was prepared and test pieces of 15 mm square were prepared. 10 sheets of the test pieces and 15 g of a 3-mass% hydrogen peroxide aqueous solution were put in a 50-mL polypropylene-made bottle, and heated in an electric furnace at 95°C for 20 hours, and thereafter cooled to room temperature. The test pieces were removed from the hydrogen peroxide aqueous solution; and a TISAB solution (10) (manufactured by Kanto Chemical Co., Inc.) was added to the remaining hydrogen peroxide aqueous solution; and the fluorine ion concentration in the obtained hydrogen peroxide aqueous solution was measured by a fluorine ion meter. The fluorine ion concentration (concentration of fluorine ions having dissolved out) per sheet weight was calculated from an obtained measurement value according to the following formula.

Dissolving-out fluorine ion concentration (ppm by mass) = the measurement value (ppm) × the amount of the hydrogen peroxide aqueous solution (g) / the weight of the test piece (g)

[Table 4]

[Table 4]

Table 4

| | 80°C Abrasion loss (mg) | Ozone exposure test | Air permeation coefficient (cm³·mm/ (m²·24h·atm)) | 120°C Tensile creep strain (%) | 65°C Storage elastic modulus (MPa) | Amount of recovery (mm) | 65°C Repulsion (MPa) | Electric wire coating test | | injection moldability | Film moldability | Chemical solution immersion crack test | Hydrogen peroxide aqueous solution immersion test (ppm by mass) |
|---|---|---|---|---|---|---|---|---|---|---|---|---|---|
| | | | | | | | | Coating breakage | Number of sparks (times) | | | | |
| Example 1 | 26.0 | good | 336 | 0.60 | 431 | 0.397 | 57.0 | good | 2 | 2 | good | good | 2.3 |
| Example 2 | 26.9 | good | 333 | 0.72 | 425 | 0.342 | 48.5 | good | 1 | 3 | good | good | 2.5 |
| Example 3 | 30.3 | good | 305 | 0.62 | 446 | 0.345 | 51.3 | good | 0 | 3 | - | good | 2.3 |
| Example 4 | 32.6 | good | 296 | 0.71 | 433 | 0.233 | 33.6 | good | 0 | 3 | - | good | 2.3 |
| Example 5 | 31.1 | good | 303 | 0.76 | 436 | 0.292 | 42.4 | good | 0 | 3 | - | good | 2.3 |
| Example 6 | 32.3 | good | 303 | 0.99 | 422 | 0.226 | 31.8 | good | 0 | 3 | - | good | 2.4 |
| Example 7 | 31.3 | good | 307 | 1.13 | 419 | 0.228 | 31.8 | good | 0 | 3 | - | good | 2.4 |
| Example 8 | 32.1 | good | 319 | 1.05 | 402 | 0.208 | 27.9 | - | - | - | - | good | 2.4 |
| Comparative Example 1 | 34.8 | poor | 280 | 0.45 | 475 | 0.385 | 61.0 | good | 0 | 3 | - | poor | 2.3 |
| Comparative Example 2 | 38.5 | poor | 255 | 0.80 | 460 | 0.192 | 29.4 | poor | - | Burr | - | poor | 2.3 |
| Comparative Example 3 | 35.1 | poor | 261 | 0.44 | 520 | 0.445 | 77.1 | - | - | - | - | poor | 2.3 |
| Comparative Example 4 | 20.9 | good | 380 | 0.58 | 403 | 0.425 | 57.1 | poor | - | poor | - | good | 2.3 |
| Comparative Example 5 | 29.3 | good | 334 | 1.85 | 374 | 0.112 | 14.0 | good | 0 | 3 | - | good | 2.4 |
| Comparative Example 6 | 32.0 | poor | 318 | 0.99 | 421 | 0.227 | 31.9 | good | 0 | 3 | - | good | 6.9 |

**Claims**

1. A copolymer, which is a fluorine-containing copolymer which

   - comprises tetrafluoroethylene (TFE) units and, based on the total of monomer units, 5.0-7.0 mass% of hexafluoropropylene units and 1.4-2.9 mass% of fluoro(alkyl vinyl ether) units,
   - has a melt flow rate determined by the method mentioned in the specification at 372°C of 9-40 g/10 min. and
   - has a total number of -CF=CF$_2$, -CF$_2$H, -COF, -COOH, -COOCH$_3$, -CONH$_2$ and -CH$_2$OH groups determined by the method mentioned in the specification of $\leq$ 90 per 10$^6$ main-chain carbon atoms.

2. The copolymer of claim 1, which contains, based on the total of monomer units, 5.2-6.8 mass% of hexafluoropropylene units.

3. The copolymer of claim 1 or 2, which contains, based on the total of monomer units, 1.7-2.4 mass% of fluoro(alkyl vinyl ether) units.

4. The copolymer of any of claims 1-3, which has a melt flow rate determined by the method mentioned in the specification at 372°C of 11-38 g/10 min.

5. The copolymer of any of claims 1-4, wherein the fluoro(alkyl vinyl ether) units are perfluoro(propyl vinyl ether) units.

6. An injection molded article, comprising the copolymer of any of claims 1-5.

7. A coated electric wire, comprising a coating layer comprising the copolymer of any of claims 1-5.

8. A formed article, which comprises the copolymer of any of claims 1-5, and is a member to be compressed, a filter cage or an electric wire coating.


**Patentansprüche**

1. Copolymer, welches ein fluorhaltiges Copolymer ist, das

   - Tetrafluorethylen (TFE)-Einheiten und, bezogen auf die Gesamtheit der Monomereinheiten, 5,0-7,0 Masse-% Hexafluorpropyleneinheiten und 1,4-2,9 Masse-% Fluor(alkylvinylether)-Einheiten umfasst,
   - eine Schmelzflussrate bei 372°C, bestimmt durch das in der Beschreibung angegebene Verfahren, von 9-40 g/10 min aufweist und
   - eine Gesamtanzahl von -CF=CF$_2$-, -CF$_2$H-, -COF-, -COOH-, -COOCH$_3$-, -CONH$_2$- und -CH$_2$OHOH-Gruppen, bestimmt mit dem in der Beschreibung angegebenen Verfahren, von $\leq$ 90 je 10$^6$ Hauptketten-Kohlenstoffatomen aufweist.

2. Copolymer gemäß Anspruch 1, welches bezogen auf die Gesamtheit der Monomereinheiten 5,2-6,8 Masse-% Hexafluorpropyleneinheiten umfasst.

3. Copolymer gemäß Anspruch 1 oder 2, welches bezogen auf die Gesamtheit der Monomereinheiten 1,7-2,4 Masse-% Fluor(alkylvinylether)-Einheiten umfasst.

4. Copolymer gemäß irgendeinem der Ansprüche 1-3, welches eine Schmelzflussrate bei 372°C, bestimmt mit dem in der Beschreibung angegebenen Verfahren, von 11-38 g/10 min aufweist.

5. Copolymer gemäß irgendeinem der Ansprüche 1-4, worin die Fluor(alkylvinylether)-Einheiten Perfluor(propylvinylether)-Einheiten sind.

6. Spritzgegossener Artikel, umfassend das Copolymer gemäß irgendeinem der Ansprüche 1-5.

7. Beschichteter elektrischer Draht, umfassend eine Beschichtungsschicht, die das Copolymer gemäß irgendeinem der Ansprüche 1-5 umfasst.

8. Geformter Artikel, der das Copolymer gemäß irgendeinem der Ansprüche 1-5 umfasst und ein Bauteil ist, das zu komprimieren ist, das ein Filterkorb ist oder das eine Beschichtung eines elektrischen Drahts ist.

**Revendications**

1. Copolymère, qui est un copolymère contenant du fluor, qui

   - comprend des motifs tétrafluoroéthylène (TFE) et, par rapport au total des motifs monomères, de 5,0 à 7,0 % en masse de motifs hexafluoropropylène et 1,4 à 2,9 % en masse de motifs fluoro(alkylvinyléther),
   - a un indice de fluidité à 372 °C déterminé par la méthode mentionnée dans la description de 9 à 40 g/10 min et
   - a un nombre total de groupes $-CF=CF_2$, $-CF_2H$, $-COF$, $-COOH$, $-COOCH_3$, $-CONH_2$ et $-CH_2OH \leq 90$ pour 106 atomes de carbone de la chaîne principale.

2. Le copolymère selon la revendication 1, qui contient, par rapport au total des motifs monomères, de 5,2 à 6,8 % en masse de motifs hexafluoropropylène.

3. Le copolymère selon la revendication 1 ou 2, qui contient, par rapport au total des motifs monomères, de 1,7 à 2,4 % en masse de motifs fluoro(alkylvinyléther).

4. Le copolymère de l'une quelconque des revendications 1 à 3, qui a un indice de fluidité à 372 °C déterminé par la méthode mentionnée dans la description de 11 à 38 g/10 min.

5. Le copolymère de l'une quelconque des revendications 1 à 4, dans lequel les unités fluoro(alkylvinyléther) sont des unités perfluoro(propylvinyléther).

6. Article moulé par injection, comprenant le copolymère de l'une quelconque des revendications 1 à 5.

7. Fil électrique revêtu, comprenant une couche de revêtement comprenant le copolymère de l'une quelconque des revendications 1 à 5.

8. Article moulé, qui comprend le copolymère de l'une quelconque des revendications 1 à 5, et qui est un élément à comprimer, une cage de filtre ou un revêtement de fil électrique.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010507272 PCT
- US 2008090065 A1
- US 2010288533 A1